# EUROPÄISCHE PATENTSCHRIFT

(11) **EP 0 402 720 B1**
(45) Veröffentlichungstag und Bekanntmachung des Hinweises auf die Patenterteilung: **24.08.1994**
(21) Anmeldenummer: 90110502.3
(22) Anmeldetag: 01.06.1990
(51) Int. Cl.: A61C 13/00, B23Q 35/10, B23Q 1/16

(54) **Gerät zur Herstellung von Formkörpern und Verwendung desselben zur Herstellung von Inlays, Onlays, und Kronen in der Zahnmedizin.**
Device for making forms, and the use of that device for making dental inlays, onlays and crowns.
Dispositif pour la fabrication de formes, et l'utilisation de ce dispositif pour la fabrication d'inlays, d'onlays et de couronnes dans l'art dentaire.

(30) Priorität: 13.06.1989 CH 2224/89
(43) Veröffentlichungstag der Anmeldung: 19.12.1990
(73) Patentinhaber: MIKRONA TECHNOLOGIE AG, CH-8957 Spreitenbach (CH)
(72) Erfinder: Eidenbenz, Stefan, CH-8185 Winkel (CH); Novak, Claude, CH-5430 Wettingen (CH)
(74) Vertreter: EGLI-EUROPEAN PATENT ATTORNEYS

(56) Entgegenhaltungen:
- BE-A- 359 889
- DE-C- 257 799
- FR-A- 2 558 717
- GB-A- 541 342

## Beschreibung

Die Erfindung betrifft ein Gerät zur Herstellung eines Formkörpers durch Kopieren eines Modellkörpers gemäss dem Oberbegriff des Anspruchs 1. Derartige Geräte werden zum Kopieren von unregelmässigen Körpern eingesetzt.

Aus der DE-C-257 799 ist ein gattungsgemässes Gerät bekannt, bei welchem die Schwenkachse, um welche die den Modellkörper und den Formkörper tragende Wippe schwenkbar ist, gegenüber den besagten Körpern seitlich und nach unten versetzt ist. Dies hat zur Folge, dass eine Rotation des Modellkörpers und des Formkörpers um die Schwenkachse, wie sie bei einer vollständigen Abtastung der Oberfläche des ersteren unumgänglich ist, Zwangsläufig zu einer beträchtlichen räumlichen Verschiebung derselben führt. Dadurch wird die Abtastung des Formkörpers, dem der Taster manuell nachgeführt werden muss, beträchtlich erschwert und die Präzision des Kopierens beeinträchtigt. Der Arbeitsbereich des Bearbeitungswerkzeugs verschiebt sich analog, wodurch auch eine Abschirmung desselben schwieriger und aufwendiger wird.

Demgegenüber wird durch die erfindungsgemässe Ausbildung des Geräts ermöglicht, Defektkörper und andere Formkörper herzustellen, die sich durch eine hohe Genauigkeit auszeichnen und insbesondere als Defektkörper in der Zahnheilkunde so genau bearbeitet werden können, dass damit beim Einsetzen in den Zahn eine Spaltweite zwischen dem Zahnmaterial und dem Defektkörper erreicht werden kann, die unterhalb der kritischen Spaltweite für die Bildung von Karies liegt.

Aus der GB-A-541 342 ist ein Kopiergerät zur Herstellung von Propellerschaufeln bekannt, bei welchem ein Modellkörper und zwei Formkörper auf einem Schlitten montiert und gemeinsam längsverschiebbar sind, während Tastkörper und Bearbeitungswerkzeuge auf einer um eine horizontale Achse schwenkbaren, vertikal und quer verschiebbaren gemeinsamen Halterung montiert sind.

Mit einem derartigen Gerät sind nur Flächen mit höchstens geringfügigen Hinterschneidungen, wie eben die Oberflächen von Propellerschaufeln, kopierbar. Körper von allgemeinerer Form können so nicht hergestellt werden. Bei der beabsichtigten Verwendung des erfindungsgemässen Geräts müssen jedoch nahezu beliebige Formen hergestellt werden können.

Die Erfindung ermöglicht, in sehr einfacher und direkter Weise Zahnfüllungen, Kronen und dgl. aus Keramik herzustellen und damit insbesondere Dentalamalgame, welche wegen ihres Quecksilbergehalts mehr und mehr abgelehnt werden, zu ersetzen. Die für dentalmedizinische Zwecke entwickelten Keramiken zeichnen sich ausserdem durch grosse Härte aus und sind auch in ihren übrigen Eigenschaften für den Ersatz schadhafter Zahnpartien bestens geeignet.

Die Herstellung der Defektkörper durch mechanische Uebertragung der Form von Abdrücken ist rasch zu bewerkstelligen und erlaubt eine sehr hohe und genau kontrollierbare Präzision. Aufwendiges und die Dimensionen veränderndes Sintern ist nicht erforderlich.

Im folgenden wird die Erfindung anhand von Zeichnungen, welche lediglich Ausführungsbeispiele darstellen, näher erläutert. Es zeigen
- Fig. 1: ein schematisch dargestelltes Gerät zur Herstellung von Formkörpern, insbesondere von Inlays, Onlays und Kronen in der Zahnmedizin, in räumlicher Darstellung,
- Fig. 2: einen schematisch dargestellten Vertikalschnitt eines Modellkörper- und eines Formkörper-Halters,
- Fig. 3: eine schematisch dargestellte Ansicht einer weiteren Ausführungsform eines Modellkörper- und eines Formkörper-Halters, wobei in Fig. 2 und 3 jeweils die linke Figur den Modellkörper-Halter zeigt,
- Fig. 4: einen schematisch dargestellten Vertikalschnitt einer weiteren Ausführungsform eines Halters für Modell- und Formkörper und
- Fig. 5: eine schematisch dargestellte Ansicht, teilweise im Schnitt, einer weiteren Ausführungsform eines Gerätes zur Herstellung von Formkörpern, bei welchem die FormkörperStation mit dem Bearbeitungswerkzeug gegenüber dem übrigen Gerät abgedeckt ist.

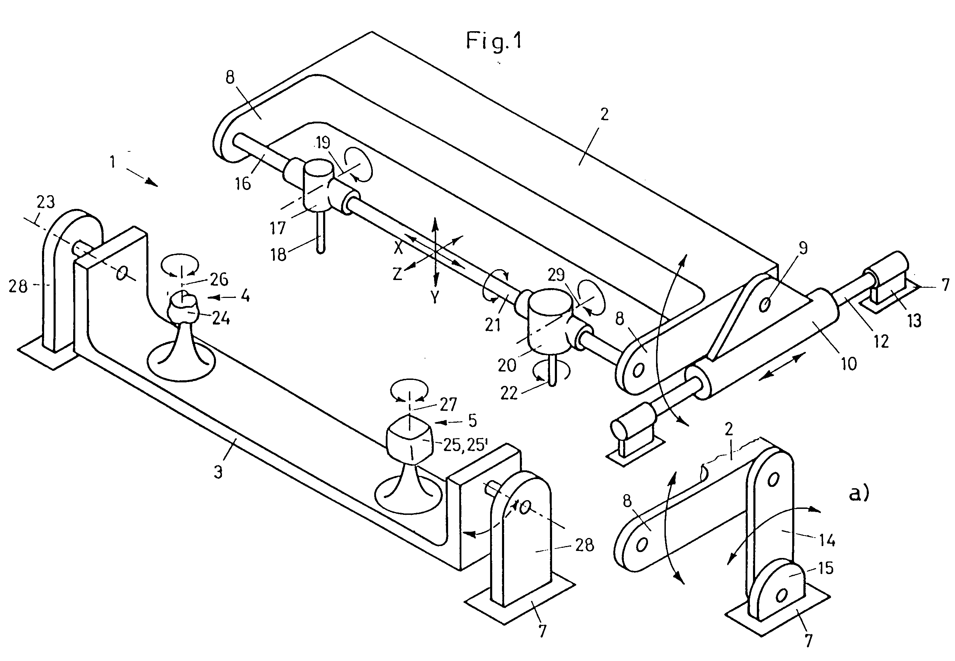

Das in Figur 1 dargestellte Gerät zur Herstellung von Formkörpern ist für die Herstellung von Inlays, Onlays und Kronen in der Zahnmedizin ausgelegt. Das Gerät besteht im wesentlichen aus einer Kopiereinrichtung 1, welche in einer Traggabel 2 gelagert ist, und aus einer Wippe 3, welche eine Modellkörper-Station 4 und eine Formkörper-Station 5 trägt. Ein in Figur 1 nur schematisch angedeuteter Fundament-Körper 7 trägt die Traggabel 2 und die Wippe 3, die beide beweglich abgestützt sind. Die Traggabel 2 weist zwei Gabelarme 8 auf, zwischen denen die Kopiereinrichtung 1 angeordnet ist. Die Traggabel 2 ist mittels zwei Gelenken 9 an einem Führungskörper 10 schwenkbar gelagert, welcher auf einer Führungsstange 12 verschiebbar geführt ist. Die Führungsstange 12 ist an ihren Enden mittels Ständern 13 am Fundamentkörper 7 abgestützt.

In einer anderen Ausführungsform in der Nebenfigur a) ist die Traggabel 2 mit einem Schwenkhebel 14 gelenkig verbunden, der seinerseits in einem Sockel 15 des Fundamentkörpers 7 schwenkbar gelagert ist.

Die Kopiereinrichtung 1 setzt sich aus einer Kopierachse 16, einem Tasterfühler 17 mit einem z.B. stift- oder scheibenförmigen Tasterkörper 18 und einem Werkzeughalter 20 mit einem Bearbeitungswerkzeug 22 zusammen. Der Tasterfühler 17 und der Werkzeughalter 20 sind miteinander fest verbunden, was in Figur 1 durch ein Verbindungsrohr 21 angedeutet ist. Der Tasterkörper 18 und das Bearbeitungswerkzeug 20 sind miteinander, z.B. durch einen Zahnstangentrieb, um zur Kopierachse senkrechte Achsen 19, 29 schwenkbar. Der Werkzeughalter 20 trägt ein rotierendes, z.B. stift- oder scheibenförmiges Bearbeitungswerkzeug 22, z. B. ein Diamantwerkzeug, das von einem nicht dargestellten Antrieb angetrieben ist. Dieser kann beispielsweise ein in der Zahnmedizin verwendeter Antriebskopf mit einer Turbine sein, der das Bearbeitungswerkzeug 22 antreibt. Der Antriebskopf kann direkt am Werkzeughalter 20 angeordnet sein und auch als Führung für die Kopiereinrichtung dienen oder er kann auch an einer beliebigen Stelle des Verbindungsrohrs 21 oder am Tasterfühler 17 angeordnet sein.

Die Wippe 3 ist um eine Schwenkachse 23 schwenkbar, welche parallel zur Kopierachse 16 verläuft. Die auf der Wippe 3 angeordnete Modellkörper-Station 4 trägt als Modell 24 einen Abdruck eines Defektkörpers aus Kunststoff, nach welchem ein Inlay, ein Onlay oder eine Krone, z.B. aus Oxidkeramik, hergestellt wird. Mit dem Tasterstift 18 wird der Abdruck 24 abgetastet, wobei wegen der identischen Bewegung des Tasterfühlers 17 und des Werkzeughalters 20 die Auslenkung des Tasterstiftes 18 dieselbe Auslenkung am Bearbeitungswerkzeug 22 erzeugt. Damit kann aus dem Rohling 25' eines Formkörpers der Formkörper 25 im Kopierverfahren herausgearbeitet werden. Sowohl der Abdruck 24 als auch der Formkörper 25 sind gegenüber der Wippe 3 drehbar gelagert und miteinander mechanisch gekuppelt, sodass sie identische Drehbewegungen ausführen können. Die Drehachsen 26 und 27 des Abdruckes 24 und des Formkörpers 25 sind parallel zueinander und verlaufen senkrecht zur Schwenkachse 23, welche die beiden Drehachsen 26, 27 schneidet. Die Wippe 3 ist in Tragarmen 28 gelagert, welche ihrerseits am Fundamentkörper 7 abgestützt sind.

Das Gerät nach Fig. 1 weist mit der Drehbewegung des Bearbeitungswerkzeuges 22 acht Bewegungsachsen auf: Die drei Achsen X, Y, Z durch die Kopiereinrichtung 1, die Schwenkbewegung um die Kopierachse 16, die Schwenkbewegung des Fühlerkörpers 18 und des Bearbeitungswerkzeuges 22, um eine zur Kopierachse 16 senkrechte Achse 19, 29 die Bewegung um die Schwenkachse 23 der Wippe 3 und die Drehbewegungen des Abdruckes 24 und des Formkörpers 25, d.h. somit sieben dem Gerät eigene Bewegungsachsen. Die Führung des Tasterstiftes 18 entlang dem Abdruck 24 erfolgt zweckmässig manuell durch Führen der Kopiereinrichtung 1 mit Hilfe des Antriebskopfes, wobei mit der andern Hand die Wippe 3 und der Abdruck 24 in die jeweils gewünschte Kopierlage gebracht werden können. Durch die manuelle Betätigung des Tasterstiftes 18 und die manuelle Einstellung des Abdruckes 24 können die kompliziertesten Raumformen problemlos kopiert werden.

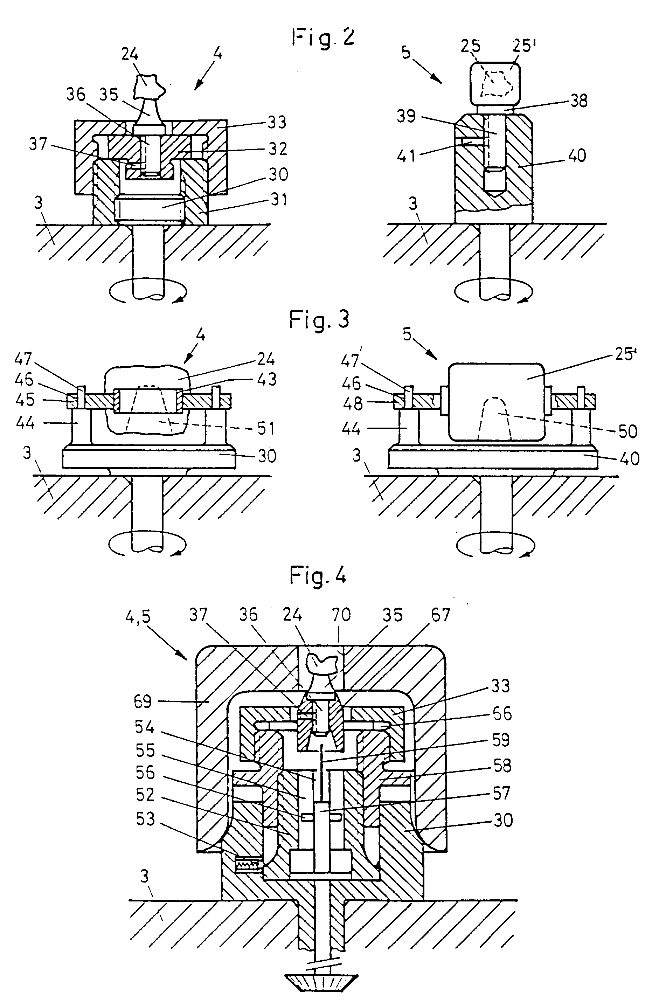

In den Figuren 2, 3 und 4 sind Details der Wippe 3 dargestellt, wobei in Figur 2 und 3 jeweils die linke Figur die Modellkörper-Station 4 und die rechte Figur die Formkörper-Station 5 zeigt. Die beiden Stationen 4, 5 sind um ihre senkrechten Achsen 26, 27 drehbar, wobei die beiden Stationen 4, 5 durch zwei nicht dargestellte Kegelgetriebe in der Wippe 3 miteinander verbunden sind und synchrone Bewegungen ausführen. Die Modellkörper-Station 4 weist einen Sockel 30 auf, auf welchen eine Einstellhülse 31 höhenverstellbar aufgeschraubt ist. Auf dem oberen Ende der Einstellhülse 31 liegt ein Abdruckhalter 32, der durch eine Ueberwurfmutter 33 festklemmbar ist. Auf diese Weise kann der Abdruckhalter 32 auch bei einem einseitig vorstehenden Abdruck 24 zentriert werden.

Auf dem Abdruckhalter 32 ist der Abdruck 24 mittels eines Stieles 35 abgestützt, dessen unteres Ende 36 mit dem Abdruckhalter 32 einen Reibschluss bildet und durch einen Mitnehmer 37 gesichert ist. Die dazugehörige Formkörperstation 4 trägt einen Formkörperrohling 25', der auf einem Halter 38 befestigt ist, dessen unteres Ende 39 mittels eines Reibschlusses in einem Sockel 40 gehalten und mit einem Mitnehmer 41 versehen ist. Der Sockel 40 braucht nicht höhenverstellbar zu sein. Es genügt, dass die Höhe des Abdruckes 24 durch die Einstellhülse 31 eingestellt werden kann. In den Formkörperrohling 25' ist der Formkörper 25 gestrichelt eingezeichnet, der mittels des Abdruckes 24 mit der Kopiereinrichtung 1 aus dem Formkörperrohling 25' herausgearbeitet wird.

In Figur 3 ist die Herstellung einer Krone dargestellt, wobei auf dem Sockel 30 der Modellkörper-Station 4 der Abdruck 24 mittels eines Ringträgers 43 auf zwei auf dem Sockel 30 angeordneten Stützen 44 befestigt ist. Der Ringträger 43 weist hierzu zwei Arme 45 mit einer Bohrung 46 auf. Die Bohrung 46 wird auf einen Stift am oberen Ende der Säule 44 aufgesteckt, wodurch der Abdruck 24 positioniert ist.

Mit Hilfe des Abdruckes 24 und der Kopiereinrichtung 1 wird aus dem Kronenrohling 25' die Krone herausgearbeitet. An dem Kronenrohling 25' werden zwei Arme 48 befestigt, z.B. angeklebt, welche mit einer Bohrung 46 zum Aufstecken auf den Stift 47 der Säulen 44 versehen ist. Die Säulen 44 sind auf dem Sockel 40 der Formkörperstation 5 abgestützt. Im Kronenrohling 25' ist eine Kavität 50 eingearbeitet, welche das Kopieren der Vertiefung 51 für die Aufnahme des Zahnstumpfes erleichtert. Dabei wird der Abdruck 24 und der Kronenrohling 25' von den Stiften 47 entfernt und unter Drehen um 180° wieder aufgesetzt, worauf dann in den Kronenrohling 25' die Vertiefung 51 für den Zahnstumpf kopiert wird.

In Figur 4 ist eine Modellkörper-Station 4 dargestellt, die gegebenenfalls auch als Formkörper-Station 5 eingesetzt werden kann. Im Sockel 30 ist eine Führungshülse 52 eingesetzt, die durch eine federnde Schnappsicherung 53 gehalten ist. In der Bohrung 54 der Führungshülse 52 sind Mitnehmerschlitze 55 eingearbeitet, in welche Mitnehmerstifte 56 eines rohrförmigen Mitnehmers 57 ragen. Mit Hilfe eines durch den Mitnehmer 57 hindurchgeführten Drahtes 59 kann der Stiel 35 und damit der Abdruck 24 aus dem Abdruckhalter 67 gedrückt werden.

Auf die Führungshülse 52 ist eine höheneinstellbare Einstellhülse 58 aufgeschraubt, auf deren oberer Stirnfläche 66 ein Abdruckhalter 67 aufgelegt und mit einer Ueberwurfmutter 33 festgehalten ist.

Der Abdruck 24 ist auf einem Stiel 35 angeordnet, dessen unteres Ende 36 mit einem Reibschluss in den Abdruckhalter 67 eingestetzt und mit einem Mitnehmer 37 gesichert ist.

Für die Zentrierung des Abdruckes 24 wird ein Ausrichtbügel 69 auf den Sockel 30 aufgesetzt, der in seinem Scheitel einen Durchgang 70 aufweist, mit dessen Hilfe der Abdruck nach den Massen des Rohlings 25' zentriert werden kann, worauf dann die Ueberwurfmutter 33 angezogen wird. Je nach der Grösse des Abdruckes 24 sind verschiedene Ausrichtbügel 69 verfügbar, mit welchen die Grösse des Rohlings 25' gerade so gross gewählt werden kann, dass die Herausarbeitung des Inlays, des Onlays oder der Krone mit einem Minimum an Bearbeitungsaufwand erfolgen kann.

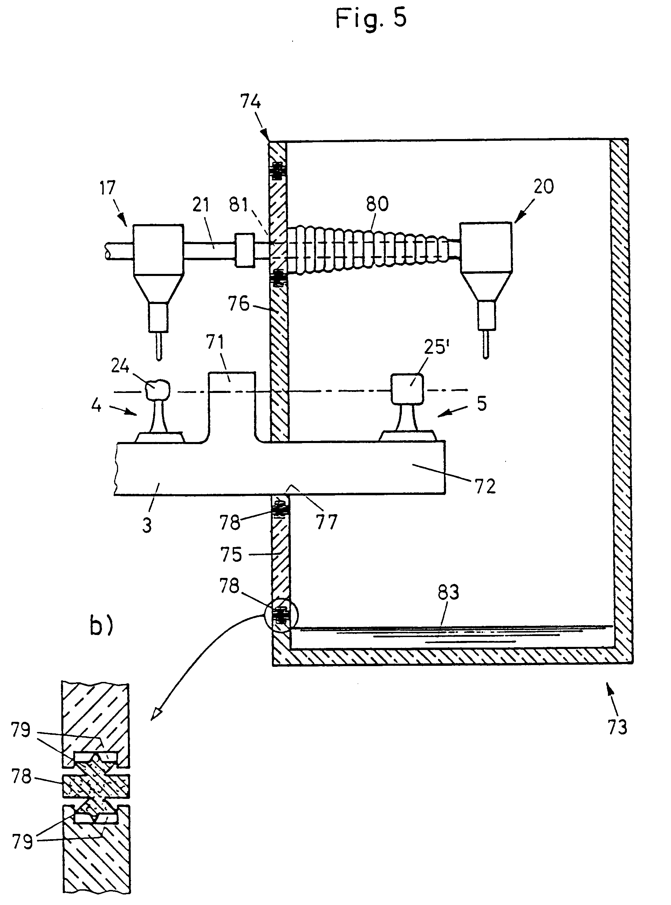

Die in Figur 5 gezeigte Variante des Gerätes unterscheidet sich von dem Gerät nach Fig. 1 dadurch, dass die Formkörper-Station 5 an einem auskragenden Ende 73 der Wippe 3 angeordnet ist. Das auskragende Ende 72 der Wippe 3 ragt in ein Abdeckgehäuse 73, dessen eine Wand 74 eine Kreisringscheibe 75 und innerhalb derselben eine Kreisscheibe 76 aufweist. In der Kreisscheibe 76 ist ein Durchgang 77 exzentrisch angeordnet, durch welchen das auskragende Ende 72 der Wippe 3 ragt, während die ModellkörperStation 4 ausserhalb des Abdeckgehäuses 73 liegt. Die Wippe 3 kann hierbei auch an einer einzigen Lagereinrichtung 71 gelagert sein.

Die Kreisringscheibe 75 und die Kreisscheibe 76 sind gegeneinander drehbar und durch elastische Dichtungsringe 78, siehe auch die vergrösserte Nebenfigur b), abgedichtet. Der Dichtungsring 78 weist Zacken 79 auf, zwischen denen Fett eingebracht wird. Dadurch ist die Beweglichkeit der beiden Scheiben 75, 76 gewährleistet.

In der Kreisringscheibe 75 ist ein Balg 80 an einer Bohrung 81 befestigt, durch welche das den Tasterfühler 17 und den Werkzeughalter 20 verbindende Verbindungsrohr 21 der Kopiereinrichtung 1 mit dem Wekzeughalter 20 ragt.

Für die Bearbeitung des Rohlings 25' ist der Einsatz einer Kühlflüssigkeit erforderlich, die am Grund des Abdeckgehäuses 73 sich sammelt und von dort in nicht dargestellter Weise abgeleitet wird. Durch die Verwendung eines Abdeckgehäuses 73 wird erreicht, dass der übrige Teil des Gerätes, d.h. die notwendigerweise für die Erreichung einer genauen Form des Formkörpers 25 sehr präzis ausgeführte Lagerung der Kopiereinrichtung 1 und der Wippe 3 von der Kühlflüssigkeit nicht verschmutzt wird. Wird zudem die Aussenfläche des Abdruckes 24 mit einer Touchierfarbe bedeckt, die beim Abfahren des Modells mit dem Tasterstift 18 entfernt wird und damit anzeigt, ob eine Stelle bereits mit dem Tasterstift 18 abgefahren wurde, wird diese Kontrolle durch Bespritzen durch die Kühlflüssigkeit nicht beeinträchtigt. Die Kontrolle, dass die gesamte Oberfläche des Abdruckes abgefahren wurde, kann auch in anderer Weise, z. B. durch Erzeugen einer elektrostatischen Farbspur durch eine Verfärbung infolge einer Temperaturdifferenz, einer chemischen Verbindung zweier Komponenten oder durch ein elektrochemisches Verfahren, erreicht werden.

Durch die Verwendung der beiden konzentrischen Scheiben 75, 76 wird die Beweglichkeit des Werkzeug-Halters 20 und der Nippe 3 praktisch nicht beeinträchtigt. Andererseits weist die Trennung der Bearbeitungsseite von der Abtastseite den Vorteil auf, dass damit der Lärm des Antriebs des Bearbeitungswerkzeuges und der Flüssigkeitsanfall isoliert werden können.

Das beschriebene Gerät erlaubt es, Inlays, Onlays und Kronen aus sehr harten Materialien z.B. Oxidkeramik, mit sehr hoher Genauigkeit und in kurzer Zeit herzustellen, und der Patient braucht für die fertige Behandlung nur einmal anwesend zu sein.

Aber auch für die Herstellung komplizierter Raumformen eignet sich das beschriebene Gerät in gleicher Weise.

## Patentansprüche

1. Gerät zur Herstellung eines Formkörpers (25) durch Kopieren eines Modellkörpers (24) mit einer auf einem Fundamentkörper (7) abgestützten Kopiereinrichtung (1) mit einem Tasterkörper (18) und einem Bearbeitungswerkzeug (22) sowie einer am Fundamentkörper (7) um eine Schwenkachse (23) drehbar abgestützten Wippe (3), auf welcher der Modellkörper (24) und der Formkörper (25) oder Formkörperrohling (25') um zur Schwenkachse senkrechte Drehachsen (26, 27) mechanisch verbunden synchron drehbar gelagert sind, **dadurch gekennzeichnet, dass** die Schwenkachse (23) die Drehachsen (26, 27) im Bereich des Modellkörpers (24) bzw. des Formkörpers (25) oder Formkörperrohlings (25') schneidet.

2. Gerät nach Anspruch 1, dadurch gekennzeichnet, dass die Kopiereinrichtung (1) eine zur Schwenkachse (23) der Wippe (3) parallele Kopierachse (16) aufweist, auf welcher ein Tasterfühler (17) mit dem Tasterkörper (18) und ein Werkzeughalter (20) mit dem Bearbeitungswerkzeug (22) in miteinander gekuppelter Anordnung schwenkbar und in Achsrichtung verschiebbar sind.

3. Gerät nach Anspruch 2, dadurch gekennzeichnet, dass das Bearbeitungswerkzeug (22) durch einen am Werkzeughalter (20) angeordneten Antrieb, zum Beispiel eine Luftturbine, angetrieben ist.

4. Gerät nach Anspruch 3, dadurch gekennzeichnet, dass der Tasterkörper (18) und das Bearbeitungswerkzeug (20) um je eine zur Kopierachse (16) senkrechte Achse (19, 21) schwenkbar sind.

5. Gerät nach Anspruch 2, dadurch gekennzeichnet, dass die Kopierachse (16) in einer Traggabel (2) gelagert ist, welche mit einer Gelenkanordnung (9, 10; 14) für die Vertikal- (Y) und die Horizontal-Einstellung (Z) der Kopierachse (16) an dem Fundamentkörper (7) abgestützt ist, zum Beispiel durch eine einen Führungskörper (10) mit einem Gelenk (9) tragenden Führungsstange (12) oder durch einen, an einem Sockel (15) gelagerten Schwenkhebel (14).

6. Gerät nach Anspruch 1, dadurch gekennzeichnet, dass zur Befestigung des Modellkörpers (24) und des Formkörpers (25) auf der Wippe eine Modellkörper-Station (4) und eine Formkörper-Station (5) angeordnet sind.

7. Gerät nach Anspruch 6, dadurch gekennzeichnet, dass die Modellkörper-Station (4) einen drehbaren Sockel (30) aufweist, auf welchem höheneinstellbar eine Einstellhülse (31) abgestützt ist, auf welcher der auf einem Stiel (35) aufgesetzte Modellkörper (24) über einen in der Horizontalen verschiebbaren Halter (32, 67) befestigt ist.

8. Gerät nach Anspruch 7, dadurch gekennzeichnet, dass der Sockel (30, 40) zwei Säulen (44) aufweist, auf welchen der Modellkörper (24) bzw. der Formkörper-Rohling (25') mittels Armen (45, 48) abgestützt ist.

9. Gerät nach Anspruch 8, dadurch gekennzeichnet, dass die Arme (45) an einem Ringträger (43) befestigt sind, auf welchem der Formkörper (24) verankert ist.

10. Gerät nach Anspruch 7, dadurch gekennzeichnet, dass der Modellkörper (24) und der Formkörper-Rohling (25') um 180° drehbar und mit Hilfe der Arme (45, 48) in gleicher Weise auf den Säulen (44) abstützbar ist, z.B. zwecks Kopieren einer Vertiefung (51) auf der Rückseite des Formkörper-Rohlings (25').

11. Gerät nach Anspruch 7, dadurch gekennzeichnet, dass der Sockel (30) eine zentrische Bohrung (54) aufweist, welche von der Unterseite der Wippe (3) zugänglich ist und zum Ausstossen des Modellkörpers (24) bzw. des Formkörpers (25), z.B. mittels eines Drahtes (59), dient.

12. Gerät nach Anspruch 1, **dadurch gekennzeichnet, dass** die Formkörper-Station (5) an einem auskragenden Ende (72) der Wippe (3) angeordnet ist, welches durch eine eine drehbare Kreisringscheibe (75) und eine drehbare Kreisscheibe (76) aufweisende Abdeckwand (74) von der Modellkörper-Station (4) abgeschirmt ist, wobei das Ende (72) die Kreisscheibe (76) und der Werkzeughalter (20) in einem Balg (80) die Kreisringscheibe (75) durchdringen.

13. Verwendung des Geräts nach einem der Ansprüche 1 bis 12 zur Herstellung eines Inlays, eines Onlays oder einer Krone nach einem Abdruck.

## Claims

1. Apparatus for producing a shaped body (25) by copying a model body (24), comprising a copying device (1) supported on a base body (7) with a feeler body (18) and a machining tool (22) and with a rocker (3) supported on the base body (7) so as to be rotatable about a pivot axis (23), on which rocker the model body (24) and the shaped body (25) or shaped body blank (25') are mounted for rotation in synchronism, mechanically connected, about axes of rotation (26, 27) at right angles to the pivot axis, characterized in that the pivot axis (23) crosses the axes of rotation (26, 27) in the region of the model body (24) and the shaped body (25) or shaped body blank (25') respectively.

2. Apparatus according to claim 1, characterized in that the copying device (1) has a copying axle (16) parallel to the pivot axis (23) of the rocker (3), on which copying axle a feeler sensor (17) with the feeler body (18) and a tool holder (20) with the machining tool (22) are pivotable in mutually coupled arrangement and are displaceable in the axial direction.

3. Apparatus according to claim 2, characterized in that the machining tool (22) is driven by a drive, an air turbine for example, arranged on the tool holder (20).

4. Apparatus according to claim 3, characterized in that the feeler body (18) and the machining tool (20) are pivotable about respective axes (19, 21) at right angles to the copying axle (16).

5. Apparatus according to claim 2, characterized in that the copying axle (16) is mounted in a supporting fork (2) which is supported on the base body (7) with a hinge arrangement (9, 10; 14) for the vertical (Y) and the horizontal (Z) adjustment of the copying axle (16), being supported for instance by means of a guide rod (12) bearing a guide body (10) with a hinge (9) or by means of a pivoting lever (14) mounted on a base (15).

6. Apparatus according to claim 1, characterized in that a model body station (4) and a shaped body station (5) are provided for the attachment of the model body (24) and the shaped body (25) to the rocker.

7. Apparatus according to claim 6, characterized in that the model body station (4) has a rotatable base (30) on which an adjusting sleeve (31) is supported so as to be vertically adjustable, to which adjusting sleeve the model body (24), mounted on a post (35), is attached by means of a holder (32, 67) which is displaceable horizontally.

8. Apparatus according to claim 7, characterized in that the base (30, 40) has two pillars (44) on which the model body (24) or the shaped body blank (25') are supported by means of arms (45, 48).

9. Apparatus according to claim 8, characterized in that the arms (45) are attached to an annular support (43) on which the shaped body (24) is anchored.

10. Apparatus according to claim 7, characterized in that the model body (24) and the shaped body blank (25') are rotatable around 180° and are supported by means of the arms (45, 48) in the same way on the pillars (44) for the purpose, for example, of copying a depression (51) on the reverse side of the shaped body blank (25').

11. Apparatus according to claim 7, characterized in that the base (30) has a central bore (54) which is accessible from the underside of the rocker (3) and which serves for expelling the model body (24) or the shaped body (25), for instance by means of a wire (59).

12. Apparatus according to claim 1, characterized in that the shaped body station (5) is provided on a projecting end (72) of the rocker (3) which is screened from the model body station (4) by a covering wall (74) which has a rotatable annular disc (75) and a rotatable circular disc (76), the end (72) penetrating the circular disc (76) and the tool holder (20) penetrating the annular disc (75) in bellows (80).

13. Use of the device according to one of claims 1 to 12 to produce an inlay, an onlay or a crown corresponding to an impression.

## Revendications

1. Appareil destiné à fabriquer une forme (25), en copiant un modèle (24) au moyen d'un dispositif de reproduction (1) supporté par une base (7) et pourvu d'un élément palpeur (18), d'un outil d'usinage (22) ainsi que d'une balancelle (3) supportée sur la base (7), en rotation autour d'un axe de pivotement (23), sur laquelle le modèle (24) et la forme (25) ou l'ébauche de forme (25'), sont supportés en rotation synchrone en étant liés mécaniquement, sur axes de rotation (26, 27) verticaux, perpendiculaires par rapport à l'axe de pivotement, caractérisé en ce que l'axe de pivotement (23) coupe les axes de rotation (26, 27) dans ou au voisinage du modèle (24), de la forme (25) ou de l'ébauche de forme (25').

2. Appareil selon la revendication 1, caractérisé en ce que le dispositif de reproduction (1) présente, parallèle à l'axe de pivotement (23) de la balancelle (3), un axe de reproduction (16) sur lequel un palpeur (17) pourvu de l'élément palpeur (18) et un porte-outil (20) pourvu de l'outil d'usinage (22), sont capables de pivoter et sont mobiles en translation dans la direction de l'axe, en étant couplés l'un à l'autre.

3. Appareil selon la revendication 2, caractérisé en ce que l'outil d'usinage (22) est entraîné par un dispositif d'entraînement disposé sur le porte-outil (20), par exemple une turbine à air comprimé.

4. Appareil selon la revendication 3, caractérisé en ce que l'élément palpeur (18) et l'outil d'usinage (20) sont capables de pivoter chacun autour d'un axe vertical (19, 21) perpendiculaire à l'axe de reproduction (16).

5. Appareil selon la revendication 2, caractérisé en ce que l'axe de reproduction (16) est supporté dans une fourche de support (2) qui prend appui sur la base (7) au moyen d'un montage articulé (9, 10, 14) destiné au réglage vertical (Y) et horizontal (Z) de l'axe de reproduction (16), par exemple par l'intermédiaire d'une tige de guidage (12) portant un élément de guidage (10) pourvu d'une articulation (9), ou par l'intermédiaire d'un levier pivotant (14) supporté sur un socle (15).

6. Appareil selon la revendication 1, caractérisé en ce qu'une station (4) pour modèle et une station (5) pour forme sont disposées pour fixer le modèle (24) et la forme (25) sur la balancelle.

7. Appareil selon la revendication 6, caractérisé en ce que la station (4) pour modèle présente un socle rotatif (30) sur lequel prend appui une douille de réglage (31), réglable en hauteur sur laquelle le modèle (24) placé sur une tige (35) est fixé par l'intermédiaire d'un dispositif de maintien (32, 67) capable de translation horizontale.

8. Appareil selon la revendication 7, caractérisé en ce que le socle (30, 40) présente deux colonnes (44) sur lesquelles le modèle (24) ou l'ébauche de forme (25') sont maintenus au moyen de bras (45, 48).

9. Appareil selon la revendication 8, caractérisé en ce que les bras (45) sont fixés sur un support annulaire (43) sur lequel est ancré la forme (24).

10. Appareil selon la revendication 7, caractérisé en ce que le modèle (24) et l'ébauche de forme (25') peuvent subir une rotation de 180°, et peuvent être soutenus à l'aide des bras (45, 48) de manière similaire sur les colonnes (44), par exemple dans le but de reproduire un évidement (51) au dos de l'ébauche de forme (25').

11. Appareil selon la revendication 7, caractérisé en ce que le socle (30) présente un orifice central (54) qui est accessible par le dessous de la balancelle (3) et qui sert à pousser le modèle (24) ou la forme (25), par exemple au moyen d'un fil (59).

12. Appareil selon la revendication 1, caractérisé en ce que la station (5) pour forme est disposée à une extrémité saillante (72) de la balancelle (3), ladite extrémité étant protégée de la station (4) pour modèle par une paroi de protection (74) présentant un disque annulaire (75) rotatif et un disque circulaire (76) rotatif, l'extrémité (72) traversant le disque circulaire (76) d'une part, et le porte-outil (20) dans un soufflet (80) traversant le disque annulaire (75).

13. Utilisation de l'appareil selon l'une quelconque des revendications 1 à 12, pour fabriquer un inlay, un onlay ou une couronne d'après une empreinte.
